(19) Europäisches Patentamt
European Patent Office
Office européen des brevets

(11) EP 3 054 190 A1

(12) **EUROPÄISCHE PATENTANMELDUNG**

(43) Veröffentlichungstag:
10.08.2016 Patentblatt 2016/32

(51) Int Cl.:
*F16F 15/124* (2006.01)    *F16F 15/127* (2006.01)
*F16D 13/12* (2006.01)    *F16F 15/137* (2006.01)

(21) Anmeldenummer: 16153737.8

(22) Anmeldetag: 02.02.2016

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **03.02.2015 AT 500832015**

(71) Anmelder: **Tectos GmbH**
**8010 Graz (AT)**

(72) Erfinder: **HÖFLER, Dieter**
**8020 GRAZ (AT)**

(74) Vertreter: **Babeluk, Michael**
**Florianigasse 26/3**
**1080 Wien (AT)**

(54) **DREHELASTISCHE WELLENKUPPLUNG**

(57)    Die Erfindung betrifft eine drehelastische Wellenkupplung (1) mit zumindest einem Bogenfederkupplungsteil (20) mit zumindest einer Bogenfeder (21, 22).

Um auf einfache Weise eine lastabhängige Federcharakteristik ($c_t$) der Wellenkupplung (1) zu realisieren, ist vorgesehen, dass die Wellenkupplung (1) zusätzlich zumindest einen Elastomerkupplungsteil (30) mit zumindest einer Elastomerfeder (33) aufweist, wobei die Bogenfeder (21, 22) und die Elastomerfeder (33) in Reihe geschaltet sind.

Fig.1

EP 3 054 190 A1

**Beschreibung**

Die Erfindung betrifft eine drehelastische Wellenkupplung mit zumindest einem Bogenfederkupplungsteil mit zumindest einer Bogenfeder.

Für spezielle Betriebsaufgaben von drehelastischen Wellenkupplungen wird eine lastabhängige Charakteristik benötigt. Dies ist zum Beispiel zur Abstimmung von Komfort und Akustik im Leerlauf von mit Brennkraftmaschinen betriebenen Fahrzeugen, Maschinen und Anlagen nötig.

Die WO 91/06785 A1 zeigt eine drehelastische Wellenkupplung mit Bogenfedern.

Aus der DE 20 2010 012 227 U1 ist eine drehelastische Wellenkupplung mit Elastomerkupplungsteilen bekannt, welche ein lastabhängiges definiertes zweistufiges Federverhalten aufweist.

Die Veröffentlichungen WO 2010/099605 A1 und WO 2013/033825 A1 offenbaren Bogenfederkupplungsteile, bei denen die Federstopper und Federführungsbahnen ein- und mehrteilig, als eigene Teile ausgebildet und mit den jeweiligen Halteplatten fest verbunden sind.

Aus der DE 196 23 184 A1 und der EP 0 626 523 B1 sind zwei-stufige drehelastische Wellenkupplungen mit Elastomerkupplung mit mehreren in Reihe geschalteten Elastomerfedern bekannt. Weiters ist aus der WO 03/044389 A1 ein Zweimassenschwungrad mit einer Primärmasse und einer Sekundärmasse bekannt, welche drehelastisch über eine Torsionsdämpfereinrichtung verbunden sind.

Aufgabe der Erfindung ist es, auf einfache Weise eine lastabhängige Federcharakteristik der Wellenkupplung zu realisieren.

Erfindungsgemäß erfolgt dies dadurch, dass die Wellenkupplung zusätzlich zumindest einen Elastomerkupplungsteil mit zumindest einer Elastomerfeder aufweist, wobei Bogenfeder und die Elastomerfeder in Reihe geschaltet sind.

Durch diesen Aufbau wird auf einfache Weise eine lastabhängige Federcharakteristik der Wellenkupplung erreicht.

Vorzugsweise ist vorgesehen, dass die Bogenfeder und die Elastomerfeder unterschiedliche Federsteifigkeiten aufweisen, wobei vorzugsweise die Elastomerfeder eine höhere Federsteifigkeit aufweist als die Bogenfeder. Die drehweichere Bogenfederkupplung kann somit im unteren Lastbereich wirken. Geht diese aufgrund der Lastzunahme auf Anschlag, wirkt die Elastomerfeder des Elastomerkupplungsteils.

Dabei kann der Bogenfederkupplungsteil zumindest zwei parallel geschaltete Bogenfedern aufweisen.

Ein lastabhängiges definiertes zwei-stufiges Federverhalten der Wellenkupplung lässt sich auf einfache Weise erreichen, wenn zumindest einer der beiden Kupplungsteile, vorzugsweise die Bogenfederkupplung, zumindest einen den Federweg dieses Kupplungsteils begrenzenden Anschlag aufweist, wobei vorzugsweise der andere Kupplungsteil, vorzugsweise der Elastomerkupplungsteil, fest mit dem Anschlag verbunden ist.

In einer besonders bevorzugten Ausführung der Erfindung ist vorgehen, dass der Elastomerkupplungsteil mit zumindest einer Federführungsbahn einer Bogenfeder fest verbunden ist.

Die Erfindung wird im Folgenden an Hand der nicht einschränkenden Figuren näher erläutert.

Es zeigen Fig. 1 die erfindungsgemäße Wellenkupplung in einer Explosionsdarstellung, Fig. 2 die Wellenkupplung in einem Schnitt gemäß der Linie II-II in Fig. 3, Fig. 3 die Wellenkupplung in einer Seitenansicht, Fig. 4 ein Federersatzmodell der Wellenkupplung und Fig. 5 die Federcharakteristik der Wellenkupplung.

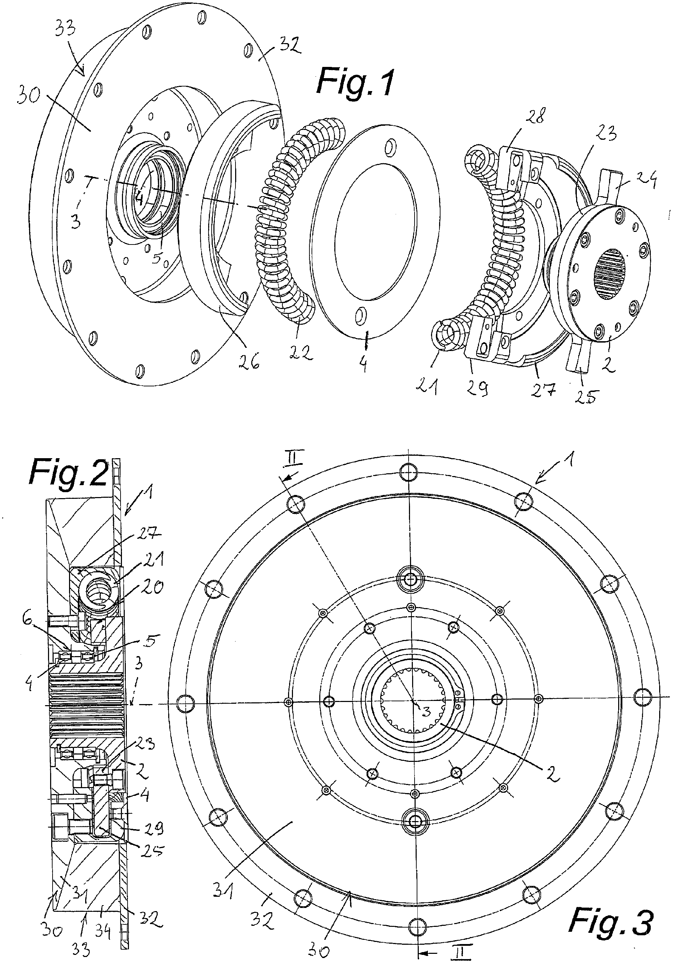

Die in den Fig. 1 bis 3 dargestellte drehelastische Wellenkupplung 1 weist einen Bogenfederkupplungsteil 20 und zumindest einen Elastomerkupplungsteil 30 auf. Über den Flansch 2 kann die Wellenkupplung 1 in einen nicht weiter dargestellten Wellenstrang eines Antriebssystems eingebunden werden. Mit Bezugszeichen 3 ist die Drehachse der Wellenkupplung 1 bezeichnet

Der Bogenfederkupplungsteil 20 weist im dargestellten Ausführungsbeispiel zwei Bogenfedern 21, 22 auf, welche in Umfangsrichtung um einen mit dem Flansch 2 verbundenen Rotorring 23 angeordnet sind, an dessen Armen 24, 25 die in jeweils einer umgebenden Federführungsbahn 26, 27 geführten Bogenfedern 21, 22 über Federstopper 28, 29 abgestützt sind. Die Anschläge für die Bogenfedern 28, 29 bildenden Federstopper 28, 29 begrenzen deren Federweg. Die Bogenfedern 28, 29 sind seitlich durch einen Abdeckring 4 abgedeckt.

Der Elastomerkupplungsteil 30 weist ein scheibenförmiges erstes Ringelement 31 und ein scheibenförmiges zweites Ringelement 32 auf, zwischen welchen ein eine Elastomerfeder 33 bildender Elastomerkörper 34 angeordnet ist. Der Elastomerkörper 34 ist in axialer Richtung an den Ringelementen 31 und 32 vulkanisiert.

Die beiden Bogenfedern 21, 22 und die Elastomerfeder 33 sind mechanisch in Reihe geschaltet. Mit dem zweiten Ringelement 32 der Elastomerkupplung 30 sind die Federstopper 28, 29 der Bogenfedern 21, 22 und die Laufbahnen 26, 27 fix verbunden.

Mit dem Flansch 2 ist der Rotorring 23 der Bogenfederkupplung 20 verschraubt. Diese beiden Bauteile können auch aus einem Teil bestehen.

In einem zentralen Bereich des Elastomerkupplungsteils 30 ist ein Lagersitz 6 angeordnet. Der Rotorring 23 mit dem Flansch 2 ist im Lagersitz 6 des Elastomerkupplungsteils 20 beispielsweise über Wälzlagern 4, 5 gelagert. Der Flansch 2 und das zweite Ringelement 32 sind somit relativ zueinander verdrehbar.

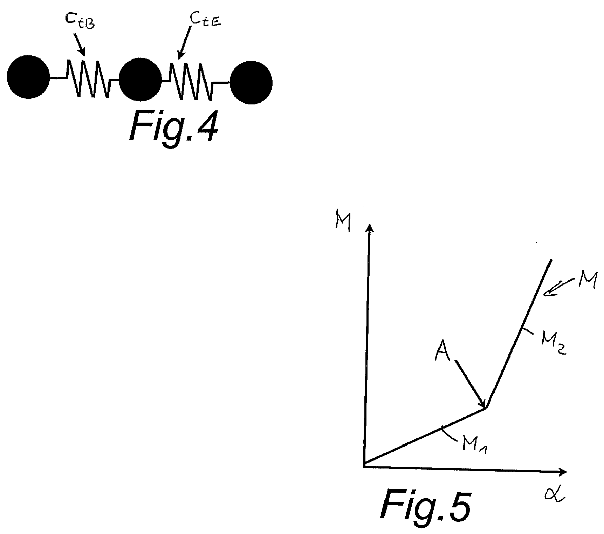

Fig. 4 zeigt ein Federersatzmodell für die Wellenkupplung. Durch die mechanisch in Serie geschalteten Federsteifigkeiten $C_{tB}$ des Bogenfederkupplungsteils 20 und $C_{tE}$ des Elastomerkupplungsteils 30 stellt sich in Abhängigkeit der Einzelfedersteifigkeiten $C_{tB}$, $C_{tE}$ ein nichtlineares Verhalten der Wellenkupplung 1 ein. Voraussetzung für die Funktion ist, dass die Federsteifigkeit $C_{tE}$ des Elastomerkupplungsteils 30 höher ist als die Federsteifigkeit $C_{tB}$ des Bogenfederkupplungsteils 20. Bis zum Anschlag des Bogenfederkupplungsteils 20 setzt sich die Gesamtfedersteifigkeit $c_t$ der Wellenkupplung 1 nach folgender Formel zusammen:

$$c_t = \frac{1}{\frac{1}{c_{tE}} + \frac{1}{c_{tB}}}$$

Ab dem Anschlag des Bogenfederkupplungsteils 20 fällt diese als elastisches Element weg, wodurch nur mehr die Steifigkeit $C_{tE}$ des Elastomerkupplungsteils 30 verbleibt. Somit weist die Wellenkupplung 1 ein zweistufiges Federverhalten auf, wie aus der in Fig. 5 dargestellten Momentenkennlinie M der Wellenkupplung 1 ersichtlich ist. In Fig. 5 ist das Moment M der Wellenkupplung 1 über dem relativen Verdrehwinkel $\alpha$ zwischen dem Bogenfederkupplungsteil 20 und dem Elastomerkupplungsteil 30 dargestellt. Die Momentenkennlinie M weist einen ersten Abschnitt $M_1$ und einen zweiten Abschnitt $M_2$ auf, wobei der erste Abschnitt $M_1$ durch die Federsteifigkeiten $C_{tB}$ und $C_{tE}$ des Bogenfederkupplungsteils 20 und des Elastomerkupplungsteils 30 zusammensetzt. Ab dem mit Bezugszeichen A angedeuteten Punkt ist die Bogenfederkupplungsteil bis auf Anschlag gespannt, sodass die Bogenfedern 21, 22 nicht mehr wirksam sind, wodurch der zweite Abschnitt $M_2$ der Momentenkennlinie M nur mehr durch die Federsteifigkeit $C_{tE}$ des Elastomerkupplungsteils 30 bestimmt wird.

Bogenfederkupplungen weisen in der Regel eine sehr geringe Federsteifigkeit auf. Dies ist besonders im Leerlauf von Vorteil. Elastomerkupplungen sind steifer, bauen aber leichter und weisen ein hervorragendes Dämpfungsverhalten auf. Die serielle Anordnung des Bogenfederkupplungsteils 20 und des Elastomerkupplungsteils 30 ermöglicht eine Kombination der Vorteile einer Elastomerkupplung mit den Vorteilen einer Bogenfederkupplung auf kleinstem Bauraum.

**Patentansprüche**

1.  Drehelastische Wellenkupplung (1) mit zumindest einem Bogenfederkupplungsteil (20) mit zumindest einer Bogenfeder (21, 22), **dadurch gekennzeichnet, dass** die Wellenkupplung (1) zusätzlich zumindest einen Elastomerkupplungsteil (30) mit zumindest einer Elastomerfeder (33) aufweist, wobei die Bogenfeder (21, 22) und die Elastomerfeder (33) in Reihe geschaltet sind.

2.  Wellenkupplung (1) nach Anspruch 1, **dadurch gekennzeichnet, dass** die Bogenfeder (21, 22) und die Elastomerfeder (33) unterschiedliche Federsteifigkeiten ($C_{tB}$, $C_{tE}$) aufweisen, wobei vorzugsweise die Elastomerfeder (21, 22) eine höhere Federsteifigkeit ($C_{tB}$, $C_{tE}$) aufweist als die Bogenfeder (21, 22).

3.  Wellenkupplung (1) nach Anspruch 1 oder 2, **dadurch gekennzeichnet, dass** der Bogenfederkupplungsteil (20) zumindest zwei parallel geschaltete Bogenfedern (21, 22) aufweist.

4.  Wellenkupplung (1) nach einem der Ansprüche 1 bis 3, **dadurch gekennzeichnet, dass** zumindest einer der beiden Kupplungsteile, vorzugsweise der Bogenfederkupplungsteil (20), zumindest einen den Federweg dieses Kupplungsteils begrenzenden Federstopper (28, 29) aufweist.

5.  Wellenkupplung (1) nach Anspruch 4, **dadurch gekennzeichnet, dass** der andere Kupplungsteil, vorzugsweise der Elastomerkupplungsteil (30), fest mit dem Federstopper (28, 29) verbunden ist.

6.  Wellenkupplung (1) nach einem der Ansprüche 1 bis 5, **dadurch gekennzeichnet, dass** der Elastomerkupplungsteil (30) mit zumindest einer Federführungsbahn (26, 27) einer Bogenfeder (21, 22) fest verbunden ist.

Fig.1

Fig.2

Fig.3

Fig.4

Fig.5

**Europäisches Patentamt**
**European Patent Office**
**Office européen des brevets**

## EUROPÄISCHER RECHERCHENBERICHT

**Nummer der Anmeldung**

EP 16 15 3737

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 583 486 A1 (VALEO [FR]) 19. Dezember 1986 (1986-12-19) * Abbildungen 2,1 * ----- | 1-6 | INV. F16F15/124 F16F15/127 F16D13/12 F16F15/137 |
| A | US 2 065 601 A (MEYER ANDRE J) 29. Dezember 1936 (1936-12-29) * Abbildung 1 * ----- | 1-6 | |

RECHERCHIERTE SACHGEBIETE (IPC)

F16F
F16D

Der vorliegende Recherchenbericht wurde für alle Patentansprüche erstellt

| Recherchenort | Abschlußdatum der Recherche | Prüfer |
|---|---|---|
| Den Haag | 20. Juni 2016 | Scordel, Maxime |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 3737

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2016

| Im Recherchenbericht angeführtes Patentdokument | Datum der Veröffentlichung | Mitglied(er) der Patentfamilie | Datum der Veröffentlichung |
|---|---|---|---|
| FR 2583486 A1 | 19-12-1986 | DE 3666082 D1 | 09-11-1989 |
| | | EP 0211701 A1 | 25-02-1987 |
| | | FR 2583486 A1 | 19-12-1986 |
| | | JP S61286617 A | 17-12-1986 |
| | | US 4763767 A | 16-08-1988 |
| US 2065601 A | 29-12-1936 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9106785 A1
- DE 202010012227 U1
- WO 2010099605 A1
- WO 2013033825 A1
- DE 19623184 A1
- EP 0626523 B1
- WO 03044389 A1